# EUROPÄISCHE PATENTANMELDUNG

(11) **EP 1 277 780 A1**
(43) Veröffentlichungstag der Anmeldung: **22.01.2003**
(21) Anmeldenummer: 02014926.6
(22) Anmeldetag: 12.07.2002
(51) Int. Cl.: C08G 64/00, C08G 64/40, C08F 6/00

(54) **Aufarbeitung von Polymersyntheselösungen**

(30) Priorität: 19.07.2001 DE 10135314
(71) Anmelder: BAYER AG, 51368 Leverkusen (DE)
(72) Erfinder: Alewelt, Wolfgang, Dr., 47809 Krefeld (DE); Ebert, Wolfgang, Dr., 47800 Krefeld (DE); Fritz, Thomas, 47839 Krefeld (DE); Jahn, Dirk, 47829 Krefeld (DE); Westermacher, Stefan, Dr., 47906 Kempten (DE); Bruynseels, Frank, Dr., 9170 Sint Gillis Waas (BE); Rechner, Johann, Dr., 47906 Kempten (DE)

(57) **Zusammenfassung**

Gegenstand der vorliegenden Anmeldung ist ein Verfahren zur Aufarbeitung von durch alkalische Bestandteile verunreinigten Lösungen von Polymeren in organischen Lösungsmitteln unter Verwendung homogen löslicher Säuren, insbesondere durch das Einleiten eines sauren Gases, und anschließender Wäsche, sowie die so erhältlichen Polymere, die sich durch die Bildung von nur wenig zersetzungsbedingten Fehlstellen bei Behandlung mit feuchter Hitze (Sterilisation) auszeichnen, deren Verwendung zur Herstellung von Extrudaten und Formkörpern und die Extrudate und Formkörper aus diesen Polymeren selbst.

## Beschreibung

Gegenstand der vorliegenden Anmeldung ist ein Verfahren zur Aufarbeitung von durch alkalische Bestandteile verunreinigte Lösungen von Polymeren in organischen Lösungsmitteln unter Verwendung homogen löslicher Säuren, insbesondere durch das Einleiten eines sauren Gases, und anschließender Wäsche, sowie die so erhältlichen Polymere, die sich durch die Bildung von nur wenig zersetzungsbedingten Fehlstellen bei Behandlung mit feuchter Hitze (Sterilisation) auszeichnen, deren Verwendung zur Herstellung von Extrudaten und Formkörpern und die Extrudate und Formkörper aus diesen Polymeren selbst.

Polycarbonat, als Beispiel eines erfindungsgemäß zu waschenden Polymers, wird zum weitaus überwiegenden Teil nach dem bekannten Phasengrenzflächenverfahren hergestellt, das in den folgenden Publikationen beispielhaft beschrieben ist
- Schnell, "Chemistry and Physics of Polycarbonates", Polymer Reviews, Volume 9, Interscience Publishers, New York, London, Sydney 1964, S. 33 ff.
- D.C. Prevorsek, B.T. Debona und Y. Kesten, Corporate Research Center, Allied Chemical Corporation, Morristown, New Jersey 07960: "Synthesis of Poly(ester Carbonate) Copolymers" in Journal of Polymer Science, Polymer Chemistry Edition, Vol. 18,(1980), S. 75 ff.;
- D. Freitag, U. Grigo, P.R. Müller, N. Nouvertne', BAYER AG, "Polycarbonates" in Encyclopedia of Polymer Science and Engineering, Volume 1 1, Second Edition, 1988, S. 651 ff., und schließlich
- Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118 ff. und 138 ff.
sowie in EP-A 0 359 953 und vielen anderen Patenten.

Gegenstand dieser Veröffentlichungen sind Synthesen von Polycarbonat nach dem sogenannten "Phasengrenzflächenverfahren", die in einem zweiphasigen Reaktionsgemisch aus anorganischer Phase (Wasser, Alkali) und einer organischen Phase (organische Lösungsmittel, unlöslich in Wasser, meist chlorierte Kohlenwasserstoffe wie Dichlormethan und/oder Chlorbenzol) stattfindet.

Das Produkt dieser Synthese ist eine organische Phase (Syntheselösung), die das Polycarbonat gelöst enthält und eine anorganische wässrige, alkalische Phase, welche die in der Synthese entstehenden Salze, wie NaCl, Natriumhydrogencarbonat, Soda, außerdem Reste der eingesetzten Phenolate, Bisphenolate und Natriumhydroxyd sowie Katalysatoren und deren Folgeprodukte sowie als Verunreinigungen aus den Edukten stammende oder als Nebenprodukt entstandene wasserlösliche Verbindungen enthält. Falls statt NaOH eine andere basische Verbindung verwendet wird enthält die wässrige alkalische Phase die entsprechenden analogen Salze bzw. Folgeprodukte.

Die folgende Aufarbeitung hat das Ziel, diese anorganisch wässrige Phase möglichst vollständig abzutrennen und die verbleibenden, insbesondere alkalischen Reste der anorganischen Verbindungen, die im löslichen und dispergierten Wassergehalt der abgetrennten organischen Phase enthalten sind möglichst vollständig aus der organischen Phase zu entfernen. Man erreicht dies durch Waschvorgänge welche eventuell mit Ansäuerungsschritten kombiniert sind. Diese Reinigungsoperationen werden möglichst vor dem Aufkonzentrieren der organischen Phase durchgeführt, wenn zum Zweck des Aufkonzentrierens thermische Verfahren angewendet werden.

Ähnliche Probleme sind auch im Falle anderer Polymere bekannt. Polymere deren Syntheselösung nach dem erfindungsgemäßen Verfahren angesäuert werden können sind daher alle jene, bei deren Synthese alkalische Lösungen oder Suspensionen oder Emulsionen erhalten werden. So seien beispielhaft, ohne einschränkend zu wirken, Polysulfone, Polyethersulfone, Polyphenylenoxide, bzw. deren Suspensionen, Styrolcopolymerisate wie ABS, sofern sie in Suspension hergestellt werden, Polycarbonate, Polyestercarbonate, Polyethercarbonate und Polyether genannt.

Die Reinigung der Syntheselösung wird durch eine oder mehrere Wäschen dieser organischen Lösung mit Wasser erreicht. In der Regel geschieht dies mit Hilfe einer oder mehrerer Ansäuerungen und einer meist mehrstufigen Wasserwäsche.

Die Ansäuerung umfasst dabei entweder das gesamte Alkalipotential der Synthese oder aber bevorzugt, nach Trennung der Phasen im alkalischen pH-Bereich, nur die Neutralisation restlicher in der organischen Phase gelöster oder gemischt mit Resten der wässrigen Phase dispergierter Bestandteile der wässrigen Phase. Verwendet werden für derartige Ansäuerungen wässrige Mineralsäuren, insbesondere Salzsäure und Phosphorsäure, aber auch wässrige Lösungen organischer Säuren.

Diese Wäsche und Ansäuerung ist ebenfalls Gegenstand vieler Patente und Veröffentlichungen.

So wird in EP-A 0 023 570 ein Aufarbeitungsverfahren der alkalischen Syntheselösung unter Verwendung von Scherenergie erzeugenden Separatoren, gegebenenfalls unter Verwendung von Dispergiermitteln, beschrieben.

Es zeigt sich nun, dass mit steigenden Anforderungen an das Polymer die klassischen Aufarbeitungswege nicht mehr ausreichen. Kleinste Spuren an anorganischen Rückständen, insbesondere Alkali- und Katalysatorreste, aus dem Syntheseweg rufen bei Anwendungen in denen das Polymer hohen Temperaturen, evtl. kombiniert mit Feuchtigkeit, ausgesetzt ist, bereits signifikante Schädigungsbilder hervor. Dies können Micro-crazes, Instabilitäten der Schmelzenviskosität oder im Extremfall auch die Bildung weißer Flecken aus hydrolysiertem Polymer sein. Alle diese Schädigungsbilder sind dem Fachmann bekannt.

In der Regel wird versucht, diesem Phänomen durch geeignete Additivierung zu begegnen. Der Einsatz von Stabilisatoren als Additiven ist jedoch, durch den Verlust mechanischer Eigenschaften oder z.B. ungünstiger Beeinflussung des Hydrolyseverhalten des stabilisierten Polymers, begrenzt und kann bspw. im Bereich der medizinischen oder lebensmittel-technischen Anwendung des Polycarbonats aus zulassungsrechtlichen Gründen nur sehr begrenzt genutzt werden.

Eine Abtrennung der anorganischen Bestandteile, sei es nun Salz, Salz des Katalysators oder Alkali aus der Synthese oder Wasser aus der Wäsche, ist auch deshalb sinnvoll, da in den folgenden Aufarbeitungs- und Compoundierschritten eine Abtrennung (Salz, Alkali) nicht mehr möglich ist. Im Falle des Waschwassers können beispielsweise bereits durch die Konzentrierung der Polymerlösung, sofern diese thermische Schritte beinhaltet, wie Destillationen oder Flashstufen, signifikante Schädigungen dadurch ausgelöst werden, dass das häufig als Lösungsmittel verwendete Methylenchlorid Zersetzungserscheinungen zeigt. Auch solche Reaktionen sind dem Fachmann geläufig.

Ausgehend von dieser Problematik stellte sich daher die Aufgabe ein Aufarbeitungsverfahren zu finden, welches zu einer signifikanten Senkung der anorganischen Bestandteile, insbesondere der alkalischen Bestandteile im ppb-Bereich in der organischen Polymerlösung, führt, bevor die Polycarbonatlösung zur Abscheidung des Polymers weiter aufkonzentriert wird.

Diese Aufgabe wird überraschenderweise durch ein Verfahren zur Aufarbeitung von Polymersyntheselösungen gelöst, in welchem die organische polymer-haltige Phase abgetrennt wird und mit homogen in der organischen Phase löslichen Säuren - wie Halogenwasserstoffen, organische Carbon- und/oder Sulfonsäuren mit 1-22-C-Atomen, die gegebenenfalls verzweigt oder substituiert sein können oder deren Derivaten wie z. B. Halogeniden oder Anhydriden, Mineralsäuren, Säurechloriden der Mineralsäuren, insbesondere solcher Säuren, die eine bessere Löslichkeit in Wasser als in organischen Lösungsmitteln besitzen oder mit Wasser zu solchen Komponenten abreagieren; bevorzugt HCl-Gas, SO₂, ortho/meta/Poly-Phosphorsäuren und organische Carbon- und/oder Sulfonsäuren mit 1-12-C-Atomen, die gegebenenfalls verzweigt oder substituiert sein können; ganz besonders bevorzugt HCl-Gas und Phosphorsäure - angesäuert wird und gegebenenfalls anschließend in gewohnter Weise mit Wasser gewaschen wird.

Unter "homogenes Ansäuern" bzw. "homogene Ansäuerung" wird im Kontext dieser Schrift und der Patentansprüche verstanden, dass die sauren Verbindungen in reiner Form oder in organischen Lösungsmitteln gelöst zur organischen Phase, welche das Polymer gelöst enthält, gegeben werden und sich dann zumindest in Anteilen homogen in der Polymerlösung lösen.

Dieser erfindungsgemäße Ansäuerungsschritt kann anstelle der üblichen Wäsche der polymerhaltigen Lösung mit wässrigen Mineralsäuren erfolgen, oder aber, in einer bevorzugten Ausführungsform des erfindungsgemäßen Verfahrens, als zusätzlicher Schritt zur Vervollständigung der Ansäuerung nach Abtrennung der wässrigen sauren Waschphase oder nach einem der nachfolgenden Waschschritte eingefügt werden. Der erfindungsgemäße Verfahrensschritt kann natürlich auch wiederholt durchgeführt werden. Die in der organischen Phase lösliche Säure wird dabei in Substanz, bevorzugt als Gas, oder als Lösung in einem inerten Lösungsmittel, vorzugsweise dem der Polymerlösung, zudosiert. Die homogene Einmischung in die polymer-haltige Phase erfolgt über turbulente Durchmischung, statische Mischer oder dynamische Mischer.

Bevorzugt wird das erfindungsgemäße Verfahren auf Polycarbonatlösungen angewandt.

Säuren wie sie in dem erfindungsgemäßen Verfahren verwendet werden können sind beispielsweise, ohne den Gegenstand der vorliegenden Anmeldung darauf zu beschränken: C₁ - C₂₂, gegebenenfalls verzweigte oder substituierte Carbon- bzw. Sulfonsäuren, besonders Ameisensäure, Methan-, Ethan-, i- oder n-Propan-, i-, n-oder neo-Butan-, i- oder n-Pentan-, n- oder i-Hexan-, Phenyl-, Toluol-, Xylolcarbonund/oder -sulfonsäuren, die gegebenenfalls verzweigt und/oder, besonders mit O-Alkyl, -O-Aryl, -CO-, F, Cl, Br oder Heterocyclen, substituiert sein können. Auch die Derivate dieser Säuren, welche in wässriger Lösung die Säuren ergeben, wie Säurehalogenide, insbesondere die Säurechloride oder Säureanhydride sind geeignet. Ebenso sind Dicarbon- oder Disulfonsäuren mit 1 bis 22 C-Atomen, wie Oxalsäure, Malonsäure, Bernsteinsäure, Adipinsäure, Citronensäure, Äpfelsäure, Weinsäure, Iso-, Tere- oder Orthophthalsäure etc. sowie deren unter den Carbonsäuren entsprechend beschriebenen Derivate geeignet. Auch Ketocarbonsäuren wie bspw. Brenztraubensäure eignen sich für den erfindungsgemäßen Einsatz.

Als Mineralsäuren oder saure Gase können HCl, HBr, H₂SO₄, H₂SO₃, SO₂, H₃PO₄, H₃PO₃ (phosphorige Säure/Phosphonsäure), Metaphosphorsäure, Polyphosphorsäure und deren Mischungen verwendet werden, bevorzugt HCl, SO₂ und Phosphorsäure.

Als Derivate der Säuren können z. B. Anhydride und Säurechloride verwendet werden wie SO₂, P₂O₅, P₂O₃, SOCl₂, SO₂Cl₂, POCl₃ oder die Anhydride oder gemischten Anhydride organischer Säuren, bevorzugt SO₂.

Idealerweise und damit bevorzugt sind die verwendeten Säuren gut, besonders bevorzugt sehr gut, in Wasser löslich bzw. setzen sich die verwendeten Säurederivate mit Wasser zu solchen gut bzw. sehr gut wasserlöslichen Säuren um. Damit wird das Auswaschen der überschüssigen Säure aus der organischen Phase wesentlich vereinfacht.

Die erfindungsgemäß zu verwendenden Säuren werden in Substanz, bevorzugt gasförmig, oder als Lösung dosiert. Die Lösungen sind dann in solchen organischen Lösungsmitteln bereitet, die in den in der Synthese benutzten Lösungsmitteln löslich sind, bevorzugt in Dichlormethan oder Chlorbenzol oder deren Mischungen. Es kann dabei vorteilhaft sein, die Lösungsmittel in ungetrocknetem Zustand zu verwenden, da durch gelöste Restfeuchte u.U. die Löslichkeit der sauren Verbindung im Lösungsmittel verbessert wird.

Das Einleiten der erfindungsgemäßen Säure kann an jeder Stelle der Waschprozedur der Polymersyntheselösung erfolgen. Es kann aber auch vor der Wäsche und vor einer dem Stand der Technik entsprechenden Ansäuerung mit wässrigen Säuren erfolgen. Oder aber, bevorzugt, nach der Ansäuerung mit wässrigen Säuren, eventuell mehrfach, gegebenenfalls auch nach einer Teilwäsche. Der erfindungsgemäße Ansäuerungsschritt kann ferner nach bzw. vor jeder Waschstufe oder auch nach einer Zwischenlagerung einer gemäß dem Stande der Technik gewaschenen Syntheselösung vorgenommen werden oder auch unmittelbar vor einem Konzentrierungsschritt oder Isolierungsschritt des Polymers in bzw. aus der organischen Lösung, wobei es außer im Falle flüchtiger oder thermisch zersetzlicher Säuren sinnvoll sein kann, eine ein- oder mehrstufige Wäsche mit Wasser dem Ansäuerungsschritt folgen zu lassen.

Im Falle eines additiven Schrittes, d.h. dass die erfindungsgemäße homogene Ansäuerung zusätzlich zu einer konventionellen heterogenen Wäsche an einem beliebigen Punkt der Aufarbeitung eingeschoben wird, muss die Säure, welche zur homogenen Ansäuerung benutzt wird, nicht mit der in der wässrigen Phase verwendeten übereinstimmen.

Weiterhin kann das erfindungsgemäße Verfahren der Ansäuerung als ausschließlicher Ansäuerungsschritt im Waschverfahren angewendet werden. Eventuell wird dies auch unter Verwendung von parallel oder vor oder hinter der Säure, der Säurelösung, dem Gas oder der Gaslösung, dosiertem Waschwasser praktiziert. Die erfindungsgemäße Ansäuerung kann demnach auch der letzte Schritt der Aufarbeitung sein, ohne nachfolgende Wäsche.

Wird eine Wäsche mit Separatoren verwendet, so kann das erfindungsgemäße Verfahren auch vor und nach jedem Separator zwischengeschaltet werden. Das gleiche gilt für die einzelnen Schritte einer Pendelwäsche wie sie z.B. in Rührkesseln durchgeführt werden kann.

Weiterhin kann das erfindungsgemäße Verfahren an Stelle von Separatoren auch zwischen oder in sogenannten Coalescern praktiziert werden.

Ebenso sind natürlich auch erfindungsgemäße Ansäuerungsstufen vor oder hinter gemischt arbeitenden Waschstrassen, die also Kombinationen aus verschiedenen konventionellen Waschverfahren benutzen, praktizierbar.

Das folgende Schema stellt eine schematische Aufarbeitung der organischen polycarbonathaltigen Phase dar, wie sie nach Abtrennung der alkalischen Phase beispielhaft, ohne jedoch die Erfindung darauf zu beschränken, ablaufen könnte:

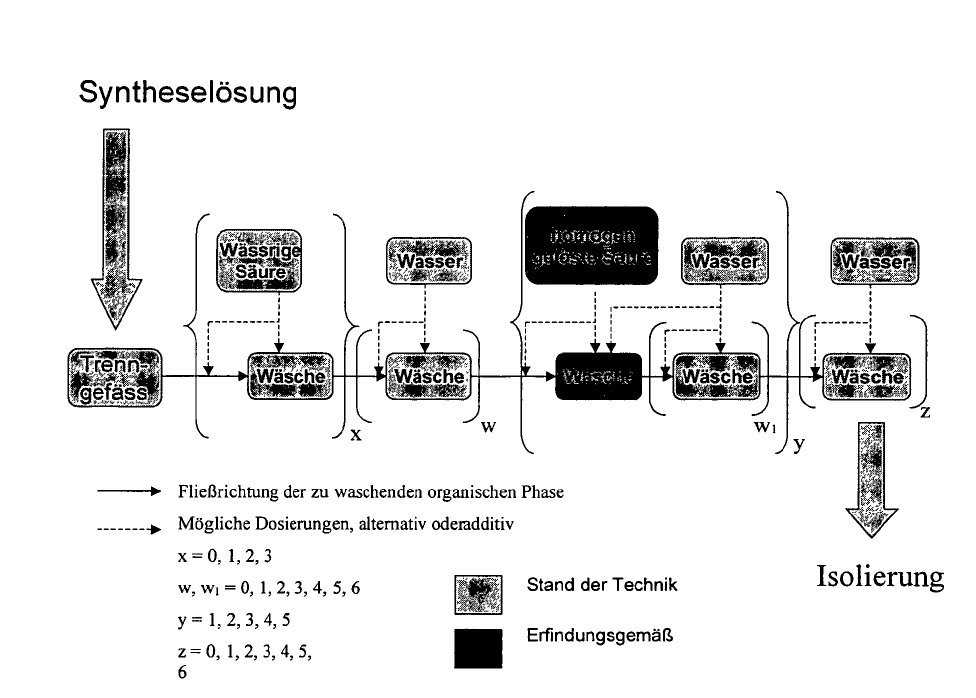

Ansäuerung steht dabei für homogene Ansäuerung, also die erfindungsgemäße Ansäuerung, d.h. der Zuführung von sauren Gasen oder homogen im organischen Lösungsmittel gelösten Säuren. Diese Einspeisung der erfindungsgemäßen Ansäuerungsmittel kann in speziellen Gefäßen, in Rohrleitungen oder aber in den beschriebenen, dem Stande der Technik entsprechenden, Geräten, wie Separatoren oder Coalescern mit und ohne Mischaggregat, stattfinden. Die Durchmischung der organischen Polymer-haltigen Phase mit der organischen säurehaltigen Phase kann dabei mittels Strömung, Turbulenz, statischen Mischern oder dynamischen Mischern (Rührer, Ultrathurax, etc) vorgenommen werden.

Einen Sonderfall stellt die Verwendung flüchtiger oder zersetzlicher, homogen in der organischen Phase gelöster Ansäuerungsmittel dar, wie HCl-Gas, Oxalsäure, Brenztraubensäure etc. wo gegebenenfalls auf die Auswaschung von Überschüssen verzichtet werden kann, wenn durch die folgenden Konzentrierungsschritte eine Entfernung oder Zersetzung sichergestellt ist.

Selbstverständlich ist das erfindungsgemäße Verfahren ganz allgemein auch zur Aufarbeitung alkalisch verunreinigter Lösungen von Polymeren in organischen Lösungsmitteln geeignet. Diese Anwendung ist daher ebenfalls Gegenstand der vorliegenden Erfindung.

Die nach dem erfindungsgemäßen Reinigungsverfahren erhältlichen fehlstellenarmen stabilen Polymere sind ebenfalls Gegenstand der vorliegenden Anmeldung.

Die Fehlstellen werden dabei wie folgt bestimmt:
Aus dem Granulat des erfindungsgemäß aufgearbeiteten Polymers, beispielhaft Polycarbonat, werden Farbmusterplättchen hergestellt. Diese Plättchen (40x60x4 mm Ausmaße) werden mittels einer Spritzgussmaschine - bspw. Einer Arburg 370-G mit einer Schließkraft von 50-85 t, 3-Zonenschnecke, Schneckenvorlaufgeschwindigkeit 40 mm/s - bei einer Massetemperatur von 300°C und einer Werkzeugtemperatur von 90°C hergestellt.

Anschließend werden die Plättchen, welche keine Fehler zeigen, 18 h bei 126°C und 1,4 bar mit Heißdampf sterilisiert, beispielsweise in einem Gerät Vacuclav 31 der Firma Melag. Die Farbmusterplättchen zeigen anschließend mehr oder weniger weiße Flecken. Ein Ausschnitt von 11,5 x16 mm wird bei 8fach Vergrößerung mittels eines Stereomikroskops, z.B. Leica "Wild M10", aufgenommen und beispielsweise mit Hilfe des Programms "analySIS" der Firma SIS ausgewertet. Es werden dabei alle Fehlstellen (=weiße Flecken) mit einem Durchmesser (Ø) größer als 0,2 mm (große Fehlstellen) und Ø zwischen 0,05 und 0,2 mm (kleine Fehlstellen) gezählt. Erfindungsgemäß als fehlstellenarm klassifizierte Polymere, die selbst Gegenstand der vorliegenden Anmeldung sind, enthalten in einem solchen Bildausschnitt weniger als 10 Fehlstellen.

Polycarbonate, wie sie in dem erfindungsgemäßen Verfahren aufgearbeitet werden können sind solche auf Basis geeigneter Diphenole also beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen.

Bevorzugte Diphenole sind Hydrochinon, Resorcin ,4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,1'-Bis-(4-hydroxyphenyl)-m- oder p- diisopropylbenzol, 2,2-Bis-(3-methyl-4-hydroxyphenyl)-propan, Bis-(3,5-dirnethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxy-phenyl)-2-methylbutan, 1,1'-Bis-(3,5-dimethyl-4-hydroxyphenyl)-m- oder p-diisopropylbenzol und 1,1-Bis-(4-hydroxyphenyl)-3,3,5-trimethylcyclohexan.

Besonders bevorzugte Diphenole sind Resorcin, 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1 '-Bis-(3,5-dimethyl-4-hydroxyphenyl)-m- oder p-diiso-propyl-benzol, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-A 3 028 635, 2 999 835, 3 148 172, 2 991 273, 3 271 367, 4 982 014 und 2 999 846, in den DE-A 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964", S. 77 ff. sowie in den JP-A 62039/1986, 62040/1986 und 105550/1986 beschrieben.

Im Falle der Homopolycarbonate wird nur ein Diphenol eingesetzt, im Falle der Copolycarbonate werden mehrere Diphenole eingesetzt, wobei selbstverständlich die verwendeten Bisphenole, wie auch alle anderen der Synthese zugesetzten Chemikalien und Hilfsstoffe mit den aus ihrer eigenen Synthese stammenden Verunreinigungen kontaminiert sein können, obwohl es wünschenswert ist, mit möglichst sauberen Rohstoffen zu arbeiten.

Als Carbonatprecursor werden Halogenderivate der Kohlensäure verwendet wie sie in der zitierten Literatur beschrieben werden, insbesondere Phosgen, wobei zur Herstellung von Polyestercarbonaten gegebenenfalls ein Teil, 0 - 90 Mo1 %, bevorzugt 25 - 75 Mo1 % (bezogen auf die Mole Bisphenole) des Phosgens durch Säurehalogenide, besonders Säurechloride organischer Dicarbonsäuren, insbesondere aromatischer Dicarbonsäuren oder Mischungen von organischen Dicarbonsäuredichloriden, ersetzt sein können. Eine spezielle Ausführungsart ist der Einsatz von organischen Dicarbonsäuren oder deren Mischungen und deren Umsetzung mit Phosgen in situ zu den entsprechenden Dicarbonsäuredichloriden, wobei die Reaktion bei geeigneten, vorübergehend oft auch sauren, pH-Werten, durchgeführt wird, und in der Regel im deutlich alkalischen pH-Bereich endet.

Katalysatoren sind Ammonium- und/oder Phosphoniumverbindungen oder tertiäre Amine wie sie in der Literatur beschrieben sind, insbesondere N-Ethylpiperidin, N-Methylpiperidin, Triethylamin und Tributylamin, oder deren Mischungen, wobei diese Katalysatoren in einer Dosierung oder aber auch durch mehrere Dosierungen in zeitlichem (batch-Verfahren) oder räumlichem (Kontiverfahren) Abstand zugegeben werden können.

Als alkalische Komponenten können alle in Wasser löslichen oder dispergierbaren Alkali- und Erdalkalihydroxyde, bevorzugt jedoch Natriumhydroxyd, Kaliumhydroxyd, Magnesiumhydroxyd und/oder Calciumhydroxyd (Aufschlämmung von Calciumoxyd in Wasser) oder deren Mischungen verwendet werden.

Der Feststoffgehalt der zu waschenden Polymerlösung kann je nach Molekulargewicht des Polymers zwischen 0,5 Gew.-% und 30 Gew.-% Polymer schwanken, bevorzugt sind bei Molekulargewichten (Gewichtsmittel "Mw") zwischen 8000 und 50000 Polymer-Feststoffgehalte zwischen 2 Gew.-% und 25 Gew.-%, bevorzugt zwischen 5 Gew.-% bis 22 Gew.-% Polymer, besonders bevorzugt Polymer-Feststoffgehalte zwischen 7 Gew.-% und 20 Gew.-% und bei Molekulargewichten (Mw) > 50000 zwischen 2 Gew.-% bis 15 Gew.-% Polymer.

Die Molmasse (Gewichtsmittel Mw) wird mittel Gelpermeationschromatographie (GPC) mit Methylenchlorid als Eluent bestimmt. Die Detekion erfolgt dabei mittels UV oder Brechungsindex (RI). Es werden Säulen auf Basis von Polystyrolgelen, geeicht gegen Polycarbonat verwendet. Im vorliegenden Fall wurde ein HP 1050 verwendet.

Das organische Lösungsmittel der zu waschenden Polycarbonatlösung sind solche Lösungsmittel, die das betreffende Polycarbonat lösen und mit Wasser ein zweiphasiges Synthesegemisch ergeben, wie aliphatische, gegebenenfalls verzweigte teiloder perhalogenierte Lösungsmittel mit 1- 10 Kohlenstoffatomen, wobei als Halogen Chlor oder Fluor verwendet wird, wie Methylenchlorid, Trichlorethan, Tetrachlorethen, weiterhin aromatische gegebenenfalls substituierte Verbindungen mit 6-18 C-Atomen wie Benzol, Toluol, o-, m- und/oder p-Xylol, Methoxy- oder Ethoxybenzol, Diphenyl, Diphenylether, Chlorbenzol, o-, m- und/oder p-Dichlorbenzol, sowie auch Mischungen aus diesen Lösungsmitteln. Bevorzugte Lösungsmittel sind Methylenchlorid und Chlorbenzol, insbesondere Chlorbenzol.

Geeignete Kettenabbrecher sind sowohl Monophenole als auch Monocarbonsäuren. Geeignete Monophenole sind Phenol, Alkylphenole wie Kresole, p-tert.Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, bzw. deren Mischungen.

Geeignete Monocarbonsäuren sind Benzoesäure, Alkylbenzoesäuren und Halogenbenzoesäuren.

Die Menge an einzusetzendem Kettenabbrecher beträgt 0,5 Mol-% bis 10 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder polyfunktionellen Verbindungen, insbesondere solche mit drei oder mehr phenolischen OH-Gruppen.

Geeignete Verzweiger sind beispielsweise Phloroglucin, 4,6-Dimethyl-2,4,6-tri-(4-hydroxyphenyl)-heptan, 2,4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)phenyl)-orthoterephthalsäureester, Tetra-(4-hydroxyphenyl)-methan, Tetra-(4-(4-hydroxy-phenyl-isopropyl)-phenoxy)-methan und 1,4-Bis-(4',4"-dihydroxy-triphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol oder deren Mischung.

Die Menge der gegebenenfalls einzusetzenden Verzweiger beträgt 0,05 Mol-% bis 2,5 Mol-%, vorzugsweise 0.1 - 1.0 Mol-%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Phthalsäure, Terephthalsäure, Isophthalsäure, tert.Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure, verzweigte und unverzweigte aliphatische C₆-C₃₄ -Dicarbonsäuren.

Von den aromatischen Dicarbonsäuren werden besonders bevorzugt die Terephthalsäure und/oder Isophthalsäure eingesetzt.

Von den aliphatischen Dicarbonsäuren werden besonders bevorzugt Undecansäuren und Dimerfettsäuren eingesetzt.

Derivate der Dicarbonsäuren sind die Dicarbonsäuredihalogenide, insbesondere die Dicarbonsäuredichloride.

Bevorzugt, besonders bevorzugt oder ganz besonders bevorzugt sind Ausführungsformen, welche die unter bevorzugt, besonders bevorzugt oder ganz besonders bevorzugt genannten Definitionen und Parameter erfüllen.

Die oben aufgeführten allgemeinen oder in Vorzugsbereichen aufgeführten Definitionen bzw. Erläuterungen und Parameter können jedoch auch untereinander, also zwischen den jeweiligen Bereichen und Vorzugsbereichen beliebig kombiniert werden. Sie gelten für die Endprodukte sowie für die Vor- und Zwischenprodukte und Verfahren entsprechend.

Der Ersatz der Carbonatgruppen durch die aromatischen Dicarbonsäureestergruppen erfolgt im wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweise der erfindungsgemäß zu verwendenden Polycarbonate, einschließlich der Polyestercarbonate, ist das bekannte Grenzflächenverfahren.

Die Molmassen Mw der erfindungsgemäßen Polymere, insbesondere Polycarbonate, liegen zwischen 12 000 und 50 000, bevorzugt zwischen 15 000 und 40 000. Die Bestimmung der Molmassen erfolgt nach dem bereits zuvor beschriebenen GPC-Verfahren.

Gegenstand der vorliegenden Anmeldung sind auch die Polycarbonate wie sie nach dem erfindungsgemäßen Verfahren erhalten werden und deren Verwendung zur Herstellung von Extrudaten und Formkörpern, insbesondere solchen zur Verwendung im transparenten Bereich, ganz besonders im Bereich optischer Anwendungen wie z.B. Platten, Stegplatten, Verglasungen, Streuscheiben, Lampenabdeckungen oder optischer Datenspeicher, wie Audio-CD's, DVD's, Minidiscs in ihren verschiedenen nur lesbaren oder aber auch einschreibbaren gegebenenfalls auch wiederholt beschreibbaren Ausführungsformen.

Die Extrudate und Formkörper aus dem erfindungsgemäßen, fehlstellenarmen Polymeren sind ebenfalls Gegenstand der vorliegenden Anmeldung.

Weitere Anwendungen sind beispielsweise, ohne jedoch den Gegenstand der vorliegenden Erfindung einzuschränken:
1. Sicherheitsscheiben, die bekanntlich in vielen Bereichen von Gebäuden, Fahrzeugen und Flugzeugen erforderlich sind, sowie als Schilde von Helmen.
2. Herstellung von Folien, insbesondere Skifolien.
3. Herstellung von Blaskörpern (siehe beispielsweise US-Patent 2 964 794), beispielsweise 1 bis 5 Gallon Wasserflaschen.
4. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
5. Herstellung optischer Datenspeicher.
6. Zur Herstellung von Ampelgehäusen oder Verkehrsschildern.
7. Zur Herstellung von Schaumstoffen (siehe beispielsweise DE-AS 1 031 507).
8. Zur Herstellung von Fäden und Drähten (siehe beispielsweise DE-AS 1 137 167 und DE-A 1 785 137).
9. Als transluzente Kunststoffe mit einem Gehalt an Glasfasern für lichttechnische Zwecke (siehe beispielsweise DE-OS 1 554 020).
10. Als transluzente Kunststoffe mit einem Gehalt an Bariumsulfat, Titandioxid und oder Zirkoniumoxid bzw. organischen polymeren Acrylatkautschuken (EP-A 634 445, EP-A 269 324) zur Herstellung von lichtdurchlässigen und lichtstreunenden Formteilen.
11. Zur Herstellung von Präzisionsspritzgussteilchen, wie beispielsweise Linsenhalterungen. Hierzu verwendet man Polycarbonate mit einem Gehalt an Glasfasern, die gegebenenfalls zusätzlich etwa 1 - 10 Gew.-% MoS₂, bezogen auf Gesamtgewicht, enthalten.
12. Zur Herstellung optischer Geräteteile, insbesondere Linsen für Foto- und Filmkameras (siehe beispielsweise DE-OS 2 701 173).
13. Als Lichtübertragungsträger, insbesondere als Lichtleiterkabel (siehe beispielsweise EP-A1 0 089 801).
14. Als Elektroisolierstoffe für elektrische Leiter und für Steckergehäuse sowie Steckverbinder.
15. Herstellung von Mobiltelefongehäusen mit verbesserter Beständigkeit gegenüber Parfüm, Rasierwasser und Hautschweiß.
16. Network interface devices
17. Als Trägermaterial für organische Fotoleiter.
18. Zur Herstellung von Leuchten, z.B. Scheinwerferlampen, als sogenannte "headlamps". Streulichtscheiben oder innere Linsen.
19. Für medizinische Anwendungen, z.B. Oxygenatoren, Dialysatoren.
20. Für Lebensmittelanwendungen, wie z.B. Flaschen, Geschirr und Schokoladenformen.
21. Für Anwendungen im Automobilbereich, wo Kontakt zu Kraftstoffen und Schmiermitteln auftreten kann, wie beispielsweise Stoßfänger ggf. in Form geeigneter Blends mit ABS oder geeigneten Kautschuken.
22. Für Sportartikel, wie z. B. Slalomstangen oder Skischuhschnallen.
23. Für Haushaltsartikel, wie z. B. Küchenspülen und Briefkastengehäuse.
24. Für Gehäuse, wie z. B. Elektroverteilerschränke.
25. Gehäuse für Elektrozahnbürsten und Föngehäuse
26. Transparente Waschmaschinen - Bullaugen mit verbesserter Beständigkeit gegenüber der Waschlösung.
27. Schutzbrillen, optische Korrekturbrillen.
28. Lampenabdeckungen für Kücheneinrichtungen mit verbesserter Beständigkeit gegenüber Küchendunst insbesondere Öldämpfen.
29. Verpackungsfolien für Arzneimittel.
30. Chip-Boxen und Chip-Träger
31. Für sonstige Anwendungen, wie z. B. Stallmasttüren oder Tierkäfige.

Die folgenden Beispiele sollen den Gegenstand der vorliegenden Erfindung illustrieren, ohne diesen jedoch einzuschränken.

### Beispiele

Parallelversuch erfindungsgemäß und Vergleichsbeispiel:
Für den Versuch wurden 40 1 einer 15 gew.-%igen Polycarbonatlösung in einem 1:1 Gemisch aus Methylenchlorid und Chlorbenzol, die bereits angesäuert und zweimal auf einem Separator mit Wasser gewaschen worden war, als Ausgangslösung benutzt.

Folgender Versuchsablauf wurde gewählt, wobei für beide Wege die gleichen Maschinen und Apparate benutzt wurden: 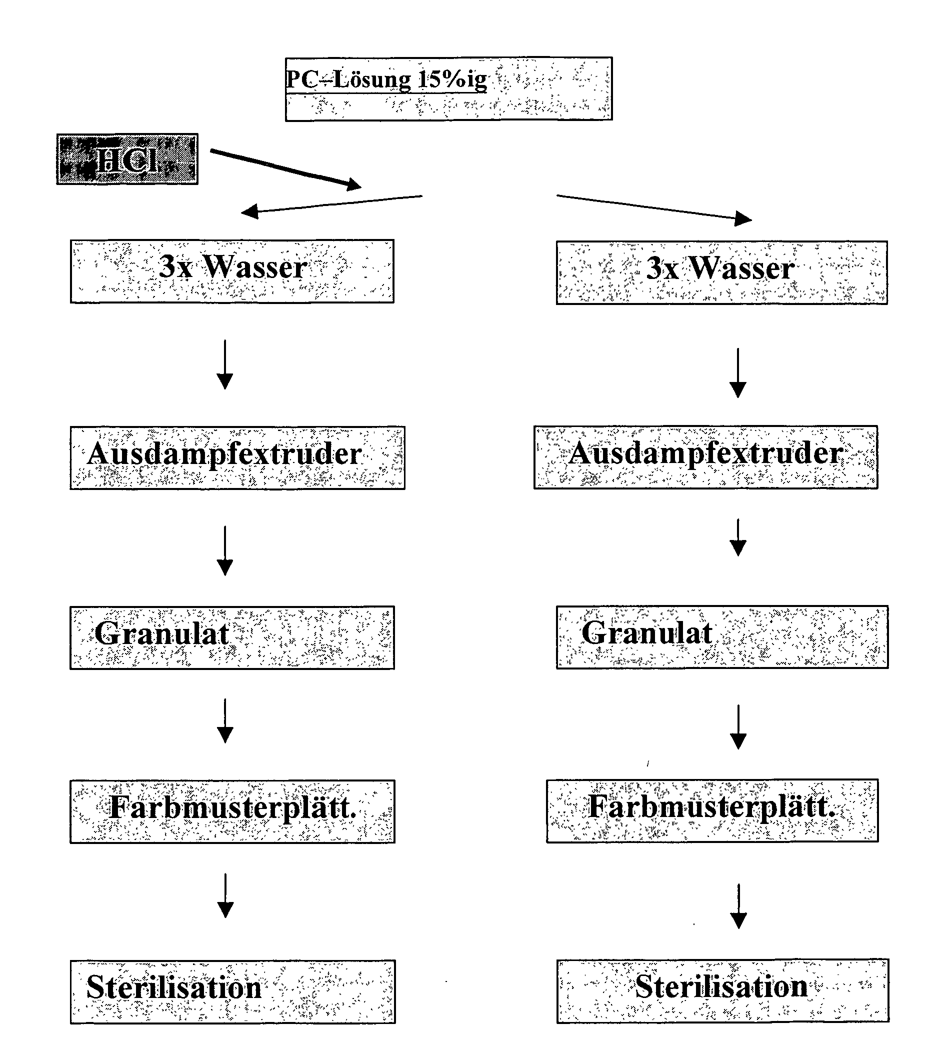
- "PC-Lösung" =: 20 l einer 15%igen Polycarbonatlösung auf Basis von Polycarbonat aus Bisphenol A in einem 1:1-Gemisch aus Methylenchlorid und Chlorbenzol
- "HCl" =: 2l Chlorbenzol in dem ca. 10 g HCl-Gas gelöst waren
- "Wasser" =: deionisiertes Wasser;
- "3x Wasser" =: dreimalige Wäsche der PC-Lösung mit je 20 l deionisiertem Wasser in einem Glasgefäß mit Propellerrührer
- "Ausdampf- extruder" =: Extrusion der PC-Schmelze über einen Ausdampfextruder
- "Granulat" =: Abspinnen des Schmelzefadens durch ein Wasserbad mit deionisiertem Wasser und Granulierung in Granulat von 15-35 mg
- "Farbmusterplätt." =: Spritzgußherstellung eines 4 mm dicken Polycarbonatplättchens
- "Sterilisation" =: Sterilisierung der Farbmusterplättchen mit Wasserdampf, 18 h bei 126°C und 1,4 bar Heißdampf.
anschließend wurden die auf den Plättchen gebildeten weißen Punkte gezählt, die durch Zersetzung von Polycarbonat durch alkalische Keimpunkte entstehen.

| Erfindungsgemäß (gelber Weg): | | Vergleichsversuch (grüner Weg): |
|---|---|---|
| 3 | Fehlstellen >0.2 mm | 9 |
| 5 | Fehlstellen 0,05-0,2 mm | 18 |

Der Erfolg des erfindungsgemäßen Verfahrens ist erstaunlich und belegt die überraschende Überlegenheit des erfindungsgemäßen Verfahrens gegenüber dem Stand der Technik. Das Verfahren kann durch weiter optimierte Vermischungstechniken der HCl-Lösung bzw. der Verwendung von HCl-Gas weiter verbessert werden.

Zur besseren Anschaulichkeit wegen sind in Figur 1 (erfindungsgemäß) und Figur 2 (nach dem Stand der Technik) Fotographien der Farbmusterplättchen nach Sterilisation abgebildet, wobei einige oberflächliche Schleifspuren, die nicht beachtet werden sollten, etwas stören.

## Patentansprüche

1. Verfahren zur Aufarbeitung von alkalischen Verunreinigungen enthaltenden Lösungen von Polymeren in organischen Lösungsmitteln, umfassend die homogene Ansäuerung der organischen Phase mit einer in dieser Phase löslichen sauren Verbindung.

2. Polymer, **dadurch gekennzeichnet, dass** es nach 18 h Sterilisation bei 126°C und 1,4 bar Heißdampfdruck weniger als 10 Fehlstellen in Form weißer Flecken auf 11,5 x 16 mm Fläche aufweist.

3. Verwendung des Polymers gemäß Anspruch 2 zur Herstellung von Formkörpern und Extrudaten.

4. Formkörper und Extrudate enthaltend Polymer gemäß Anspruch 2.
